# EUROPEAN PATENT APPLICATION

(11) **EP 4 557 154 A1**
(43) Date of publication of application: **21.05.2025**
(21) Application number: 23868442.7
(22) Date of filing: 05.09.2023
(51) Int. Cl.: G06F 30/3308, G06F 30/12, G06F 3/0486, G06F 111/20

(54) **METHOD AND DEVICE FOR VIRTUALLY SIMULATING QUANTUM COMMUNICATION CIRCUIT**

(30) Priority: 20.09.2022 KR 20220118860
(71) Applicant: Qsimplus Co., Ltd., Seoul 04534 (KR)
(72) Inventor: NOH, Kwang Seok, Seoul 01429 (KR); SHIN, You Chul, Hanam-si, Gyeonggi-do 13013 (KR); HEO, Jun, Seoul 06359 (KR)
(74) Representative: BCKIP Part mbB
(86) International application number: PCT/KR2023/013206
(87) International publication number: WO 2024/063387

(57) **Abstract**

Disclosed are a method and device for virtually simulating a quantum communication circuit. The simulation method according to the present invention comprises the steps of: displaying, on a display unit, a simulation screen including a first selection window, a second selection window, and a work window, wherein the first selection window is an area in which a plurality of element items associated one-to-one with a plurality of element blocks that can be used for modeling a quantum communication circuit are displayed, and the second selection window is an area in which a plurality of connection line items associated one-to-one with a plurality of block connection lines that can be used for modeling the quantum communication circuit are displayed; disposing an element block associated with an element item selected in the first selection window in the work window in response to a first circuit modeling request action; disposing a block connection line associated with a connection line item selected in the second selection window in the work window in response to a second circuit modeling request action; connecting each of the block connection lines disposed in the work window to two of the plurality of element blocks disposed in the work window, wherein at least one pair of element blocks among the plurality of element blocks disposed in the work window are interconnected by one of the block connection lines disposed in the work window to enable the bidirectional transfer of optical signals; and executing, in response to a simulation request action, a simulation of the quantum communication circuit virtually modeled in the work window by means of the plurality of element blocks and the plurality of block connection lines disposed in the work window.

## Description

### TECHNICAL FIELD

The present invention relates to a technology for configuring a quantum information system with software by modeling components, parts, modules, etc., which are used in quantum information technology, in a computer program and connecting and disposing them based on the modeling, and a technology for virtually simulating a quantum communication circuit. More specifically, the present invention relates to a method and device for supporting virtual modeling and simulation of a quantum communication circuit in response to a series of requests inputted by a user.

### BACKGROUND ART

Modeling refers to the process of converting complex data in the real world into a computer information structure or converting certain characteristics so as to be easy to interpret or design using mathematics or a computer. In the present invention, modeling refers to the process of converting characteristics of components/parts/modules, etc. and is used to represent output that reflects the characteristics based on the input of the modeled components/parts/modules converted into an information structure.

A graphical language is a type of computer programming language that allows arbitrary functions to be performed by using graphic representations of various functional blocks, such as NI's Labview and Mathworks' Simulink. Simulink is mainly used for signal processing, Labview is also very similar to Simulink and provides functions that facilitate connection with NI hardware.

The graphical language, as well as the corresponding simulator (Simulink, Labview), basically has the following structure:
1. It provides element blocks. Element blocks represent the results of modeling components, functional functions, modules, etc.
2. It provides element block connections. It is possible to transfer information between element blocks through the connection of element blocks.
3. It provides setting of element block input values. By inputting parameter values for the modeled element blocks, signal-processed output values based on the element block characteristics can be generated.
4. It prints the results. The final or intermediate results which have been outputted through the connection of element blocks can be delivered to the user in the form of a report, and the characteristic values or parameter input values of each element block can be reported.

Meanwhile, as the fields requiring high information security including national defense increase, the market size related to quantum information and communication is also rapidly growing. The quantum information and communication technology is being actively researched as a next-generation information and communication technology in many countries including the United States, Japan, Europe and China.

While the quantum information and communication technology has recently made remarkable technological advancements to the point where it can move beyond the laboratory level and into product production, it still has a high level of technical difficulty because it requires additional understanding of optics and physics, unlike traditional communications. As a result, accessibility is limited to experts with extensive experience and a high level of technical understanding, and as a result, it is becoming an obstacle to the spread and popularization of quantum information and communication technology.

Designing the quantum information and communication technology in a physical experimental environment requires actual physical components and devices, which results in significant inefficiencies in terms of cost and time. Therefore, there is a high need for a simulator as a software approach to virtually design quantum communication circuits and check the results in advance before actually implementing them in hardware.

Although there are several simulators that currently support quantum communication protocols, most of them are not specifically designed only for quantum communications, and in particular, there is no tool that has the component-specific and connection-specific characteristics of quantum communication circuits reflected thereinto. Furthermore, although the quantum communication requires a two-way signal transmission mechanism between a transmitting side and a receiving side, there is also a problem in that existing simulators can only simulate one-way protocols.

US Patent No. 7,797,674B1 discloses using parameters with different attributes in a graphical language at once. This is a method to increase the number of fixed value inputs for the element block and corresponds to the interface section for setting input values. Therefore, it does not solve the problem of users having to select from a set of input values.

Chinese Patent No. 104536812B discloses a method of linking a DLL (dynamic link library) configured in another language using Labview, a graphical language. A dynamic link library (DLL) file, a function prototype, a location that determines function and type parameters, etc. can be inputted through the DLL and modeled as an element block. This can be useful for adding or linking fixed features, but if the functionality of an element block needs to be updated or modified, it is inconvenient because modifications cannot be made in the simulator and the DLL must be re-linked after modification in another language.

Chinese Laid-Open Patent Publication No. 104536812A configures a Labview-based data processing system with a data layer, an application layer and a conversion layer. This relates to the process of calling an external file to utilize a DLL, and its final result uses the characteristics determined in the DLL. This division into input, transformation and application is not a new concept as being commonly used in the field of information processing and can be seen that it can be utilized with Labview.

Existing graphical languages cause the following problems or functional limitations:
1. It provides a limited element block. For the user's desired function performance block, a new element block can be configured by combining existing element blocks. However, there is the inconvenience of having to input the characteristics of each element block that is not related to the desired function, and there is a problem in that the characteristics of the block that performs the desired function cannot be input directly.
2. Connections between element blocks use some information, such as the data types between the connected element blocks, to determine whether a connection is possible. For example, concatenation of vector and scalar values is not possible. If the information types being connected are correct, the element blocks are connected without any problems. This only matches the interface of the element block, so you need to check whether the normal result is output immediately after connecting the element block. However, there is a problem that it is not easy to find the problematic part after multiple element blocks are connected because it may not be easy to check the result at each step.
3. Element block input values can only be entered in a set range. For example, a block of elements modeled by a formula, such as "linear function", may not have a defined scope. However, element blocks that perform specific functions can only select parameter values or input parameter values in a limited range. In particular, inputs that are difficult to convert into formulas become impossible to input accurately. For example, in the case of a pulse containing noise, since the noise cannot be modeled by a formula, only a change to an approximate formula is possible.

Only the final results for a system consisting of a combination of element blocks are reported. That is, because it only reports on the characteristics, input values, and final system results of each saved element, it is impossible to check the history of modifications made due to unexpected results. Alternatively, if there are multiple systems, the reported final results can be compared, but no direct analysis of the cause of the difference in results is provided.

The present invention has been created to solve the above problems, and its object is to provide a method and device for supporting a simulation dedicated to quantum communication into which element-specific and connection line-specific characteristics for quantum communication have been reflected.

Further, the object of the present invention is to provide a method and device for virtually simulating a quantum communication circuit having a bidirectional signal transmission mechanism between a transmitting side and a receiving side applied thereto.

Other objects and advantages of the present invention can be understood by the following description and will become more apparent by the embodiments of the present invention. In addition, it will be easily understood that the objects and advantages of the present invention can be realized by the means and combinations thereof indicated in the claims.

### SUMMARY OF THE INVENTION

A simulation method according to one aspect of the present invention may comprise the steps of: displaying, on a display unit, a simulation screen including a first selection window, a second selection window and a work window, wherein the first selection window is an area in which a plurality of element items associated one-to-one with a plurality of element blocks that can be used for modeling a quantum communication circuit are displayed, and the second selection window is an area in which a plurality of connection line items associated one-to-one with a plurality of block connection lines that can be used for modeling the quantum communication circuit are displayed; disposing an element block associated with an element item selected in the first selection window in the work window in response to a first circuit modeling request action; disposing a block connection line associated with a connection line item selected in the second selection window in the work window in response to a second circuit modeling request action; connecting each of the block connection lines disposed in the work window to two of the plurality of element blocks disposed in the work window, wherein at least one pair of element blocks among the plurality of element blocks disposed in the work window are interconnected by one of the block connection lines disposed in the work window to enable the bidirectional transfer of optical signals; and executing, in response to a simulation request action, a simulation of the quantum communication circuit virtually modeled in the work window by means of the plurality of element blocks and the plurality of block connection lines disposed in the work window.

The first circuit modeling request action may include at least one of a drag and drop from the first selection window to the working window and a double-click in the first selection window.

The second circuit modeling request action may include at least one of a drag and drop from the second selection window to the working window and a double-click in the second selection window.

The first circuit modeling request action may further include setting element parameters for each element block disposed in the work window.

The second circuit modeling request action may further include setting connection parameters for each block connection line disposed in the work window.

The plurality of element blocks may include a photon laser; a photon detector; at least one of an attenuator, a beam splitter, a circulator, a delay line, a Faraday mirror, a polarization beam splitter, a phase modulator, a storage line, an intensity modulator and a wave plate; a control block that generates an electric signal for controlling other connected element blocks; and a monitoring block that acquires operation information of other connected element blocks.

The plurality of block connection lines may include unidirectional optical signal lines, bidirectional optical signal lines, unidirectional quantum channels, bidirectional quantum channels, unidirectional electrical signal lines, bidirectional electrical signal lines and monitoring signal lines.

The simulation method may further comprise the step of displaying, in the working window, an equivalent circuit model representing an optical signal transmission path in a target area which is at least a portion of the entire area of the working window in a unidirectional form, in response to a circuit transformation request action.

The circuit transformation request action may include dragging from one point in the work window to another point.

The target area may cover at least two or more element blocks of the plurality of element blocks disposed in the work window. At least one pair of element blocks in the target area may be interconnected to enable bidirectional transmission of optical signals. The transmission path of the optical signals may have any one element block in the target area as a starting point and another element block in the target area as an ending point.

A device for virtually simulating a quantum communication circuit according to another aspect of the present invention may comprise an output device configured to display, on a display unit, a simulation screen including a first selection window, a second selection window and a working window, wherein the first selection window is an area in which a plurality of element items associated one-to-one with a plurality of element blocks that can be used for modeling a quantum communication circuit are displayed, and the second selection window is an area in which a plurality of connection line items associated one-to-one with a plurality of block connection lines that can be used for modeling the quantum communication circuit are displayed; an input device for receiving a first circuit modeling request action, a second circuit modeling request action, a third circuit modeling request action and a simulation request action; and a processing device operably coupled to the output device and the input device.

The processing device disposes an element block associated with an element item selected in the first selection window in the working window in response to the first circuit modeling request action. The processing device disposes a block connection line associated with a connection line item selected in the second selection window in the working window in response to the second circuit modeling request action. The processing device connects each block connection line disposed in the working window between any two element blocks among the plurality of element blocks disposed in the working window in response to the third circuit modeling request action. At least one pair of the device blocks among the plurality of device blocks disposed in the above working window are interconnected by one of the block connection lines disposed in the above working window to enable bidirectional transmission of an optical signal. The processing device may be configured to, in response to the simulation request action, execute a simulation of a quantum communication circuit virtually modeled in the working window by the plurality of element blocks and the plurality of block connection lines disposed in the working window.

### EFFECTS OF THE INVENTION

According to at least one of the embodiments of the present invention, a simulation environment dedicated to quantum communication into which element-specific and connection line-specific characteristics for quantum communication have been reflected can be supported, thereby improving user convenience.

In addition, the present invention can virtually model and simulate a quantum communication circuit to which a bidirectional signal transmission mechanism has been applied between two parties (transmitter and receiver) of quantum communication.

In addition, the present invention can help user's intuitive understanding for the optical signal transmission path in a quantum communication circuit and increase the ease of circuit modification work by converting all or part of a quantum communication circuit, which is being virtually modeled or has been modeled, into the form of a unidirectional equivalent circuit and then displaying.

In addition, the present invention can reduce the development cost by conducting tests with software instead of hardware (including chips), thereby making it possible to reduce the cost of parts and modules.

In addition, the present invention can easily implement element blocks that provide user's desired functions.

In addition, the present invention can perform precise system design/verification using input values used in an actual environment.

The effects of the present invention are not limited to the effects mentioned above, and other effects not mentioned will be clearly understood by those skilled in the art from the description of the claims.

### BRIEF DESCRIPTION OF THE DRAWINGS

The following drawings attached to this specification illustrate preferred embodiments of the present invention and, together with the detailed description of the present invention described below, serve to further understand the technical idea of the present invention. Therefore, the present invention should not be interpreted as being limited only to matters described the drawings.
FIG. 1 shows a configuration diagram for information transmission in the present invention.
FIG. 2 shows a schematic configuration diagram of a user system including a simulator.
FIG. 3 shows a schematic configuration diagram of a server system including a simulator.
FIG. 4 shows an example of a pulse waveform distortion generated.
FIG. 5 shows a flowchart for creating a new element block.
FIG. 6 shows a flowchart for presenting element block candidates.
FIG. 7 shows a flowchart for image input processing.
FIG. 8 is a drawing exemplarily showing the configuration of a simulation device for a quantum communication circuit according to one embodiment of the present invention.
FIG. 9 illustrates the overall layout of the simulation screen provided by the simulation device of FIG. 8.
FIG. 10 illustrates various element blocks that can be disposed in the work window of the simulation screen shown in FIG. 9.
FIG. 11 illustrates various block connection lines that can be disposed in the work window of the simulation screen shown in FIG. 9.
FIG. 12 shows a drawing that is referenced to exemplarily explain the process of disposing element blocks in the work window of the simulation screen shown in FIG. 9.
FIG. 13 shows a drawing that is referenced to exemplarily explain the process of disposing block connection lines in the work window of the simulation screen shown in Figure 9.
FIG. 14 shows a drawing for reference in explaining an example of a quantum communication circuit virtually modeled in the work window of the simulation screen shown in FIG. 9.
FIG. 15 shows a drawing for reference in explaining an example of an equivalent circuit model associated with the quantum communication circuit shown in FIG. 14.
FIG. 16 shows a drawing for reference in explaining another example of an equivalent circuit model associated with the quantum communication circuit shown in FIG. 14.
FIG. 17 shows a flowchart exemplarily showing a simulation method of a quantum communication circuit according to one embodiment of the present invention.

### DETAILED DESCRIPTION OF THE INVENTION

The purpose, technical configuration and resultant acting effects of the present invention will be more clearly understood by the following detailed description based on the drawings attached to the specification of the present invention. Embodiments of the present invention will be described in detail with reference to the attached drawings.

The embodiments disclosed herein should not be construed or used to limit the scope of the present invention. It will be apparent to those skilled in the art that the description herein, including the embodiments the present invention has a variety of applications. Therefore, any embodiments described in the detailed description of the present invention are intended to be exemplary in order to better explain the present invention and are not intended to limit the scope of the present invention to the embodiments.

The functional blocks shown in the drawings and described below are only examples of possible implementations. In other implementations, other functional blocks may be used without departing from the spirit and scope of the detailed description. Furthermore, although one or more of functional blocks of the present invention are represented as individual blocks, one or more of the functional blocks of the present invention may be a combination of various hardware and software configurations that perform the same function.

Terms that include ordinal numbers such as first, second, etc. are used to distinguish one of the various components from the rest, and are not used to limit the components by such terms.

Also, the expression "including certain components" is an "open" expression, simply indicating the presence of those components, and should not be construed as excluding additional components.

Furthermore, when a component is referred to as being "connected" or "coupled" to another component, it should be understood that while one component may be directly connected or coupled to that other component, there may also be other components in between.

The quantum information technology system design and verification device in the present invention operates based on modeled element blocks. The modeled element blocks can be part or all of the quantum information technology system components, and the element blocks can be combined to form larger element blocks. For ease of explanation, element blocks will be expressed by dividing them into functional units. Therefore, an element block may include an element block that models parts/components/modules, and a combination of the parts/components/modules may also be expressed as an element block.

Basic terms such as drag, item selection and double-click which are generally used in graphic languages are not separately defined in the present invention and may be redefined as needed. The element block modeling process or element block connection process, etc. can be executed by using a mouse or a screen touch, etc. but in order to focus on the process of creating new element blocks, etc. which is the main purpose of the present invention, the explanation of the secondary processes will be omitted.

A simulator generally refers to a processing device for deriving a final result using a specific language, and in the present invention, refers to a processing device that derives a final result using a graphical language-based element block.

Hereinafter, a method for modeling element blocks and configuring a quantum information technology system according to an embodiment of the present invention will be described with reference to the accompanying drawings. The present invention may have various modifications and forms, and specific embodiments thereof will be illustrated in the drawings and described in detail in herein. However, this is not intended to limit the present invention to such specific form as disclosed herein, but should be understood to include all modifications, equivalents, or substitutes included in the spirit and technical scope of the present invention.

The terms used in this application are used only to describe particular embodiments and is not intended to limit the present invention. Singular expressions include plural expressions unless the context clearly indicates otherwise. In this application, it should be understood that terms such as "include" or "have" are intended to specify the presence of a feature, number, step, operation, component, part, or combination thereof described in the specification, but do not exclude in advance the possibility of the presence or addition of one or more other features, numbers, steps, operations, components, parts, or combinations thereof.

Unless otherwise defined, all terms used herein including technical or scientific terms have the same meaning as generally understood by one of ordinary skill in the art to which this invention belongs. Such terms as defined in generally used dictionaries should be interpreted as having a meaning consistent with their meaning in the context of the relevant art, and will not be interpreted in an idealized or overly formal sense, unless expressly defined otherwise in this application.

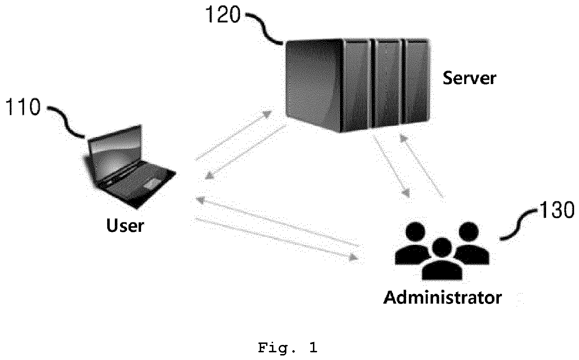

FIG. 1 shows a configuration diagram for information transmission in the present invention.

The user 110 is a subject who directly uses the graphic language and who performs system design/verification such as creating new element blocks, connecting element blocks and entering parameter values.

The server 120 can be responsible for storing/processing information of a simulator for a quantum information technology system such as storing new modeling element block information, providing and confirming valid connections when connecting element blocks and generating system output results.

The administrator 130 is responsible for monitoring user/server actions, directing user/server actions and maintaining the system, etc.

Information can be exchanged between each member, and users can save information used in the simulator such as new block creation information, element block connection information and input parameter values. Alternatively, the simulator may be located on a server and the information may be stored only on the server. The subject running the simulator can be a user, a server or both a user and a server. That is, it can run only on the user's computer, or the user can connect to a server and have it run on the server. Alternatively, some functions may be performed on the user's computer, other functions may be performed on the server, and the results of the performance may be transmitted to the user or the server.

In the following, for convenience of explanation, the simulator execution subject is designated as a user and the server is exemplified as a subject that can only be a joint execution subject with the user. If a user connects to a server and runs a simulator on the server, the simulator execution subject can be the server. However, since this does not harm the main purpose of the invention, but only changes some of the information transmitted between the user and the server, the simulator execution subject is exemplified as the user.

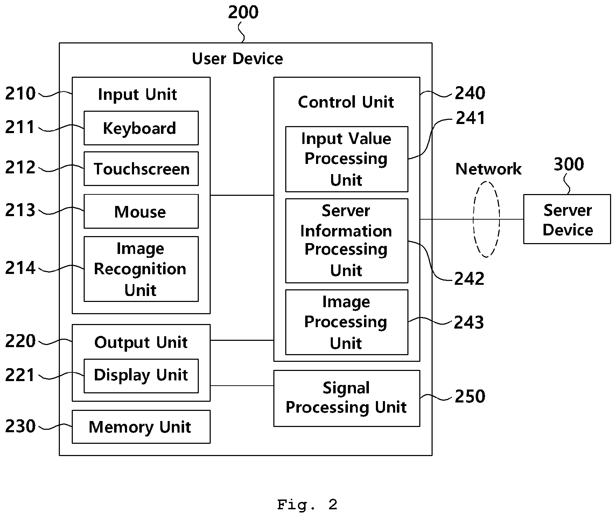

FIG. 2 is a schematic diagram of a user 110 system including a simulator according to one embodiment of the present invention.

The input unit 210 is a device unit for receiving information from a user and may include a user input unit (e.g., a keyboard device 211, a touch screen 212, a mouse 213, etc. The input unit 210 can also input documents containing specifications of components/parts/modules, actual input/output pictures used in hardware experiments, etc., which can be received by the image recognition unit 214.

The output unit 220 is a device unit that displays user input or processing results for user input, etc., which can be displayed through a display unit 221 such as a monitor or touch screen.

The memory unit 230 can store information used in the simulator, such as element block information generated, element block connections, parameter values inputted, system configuration diagram and output results. The memory unit 230 can transmit/receive or share some or all of the stored information with the server device 300 through a network. The memory can be stored/read in all situations in the system such as transmitting information or processing signals. For convenience, the storage/read time is not specified below.

The control unit 240 represents processing units for simulator input, and detailed function of each processing unit is as follows.

The input value processing unit 241 recognizes or distinguishes the input from the input unit 210, connects the input value to a modeled element block and stores it in the memory unit 230.

The server information processing unit 242 processes information to be transmitted to the server or processes information received from the server and transmits it to the output unit 220 or image processing unit 243.

The image processing unit 243 performs processing functions for configuring element blocks on the screen and representing the arrangement of element blocks on the output unit, and provides a function for distinguishing element blocks by generating an object name for each element block.

The signal processing unit 250 performs calculations such as processing signals regarding the characteristics of the selected element block and the input of the element block and transmits the results to the output unit.

Even when a user connects to a server and uses it as a terminal, the user system can operate without deviating from its original purpose, although the role of each functional unit may be reduced/expanded.

The server device 300 stores/processes information of a simulator for a quantum information technology system, such as storing new modeling element block information received from a user, providing and confirming valid connections when connecting element blocks and generating the system's output results. The server device 300 can have a larger memory or higher processing performance than the user device 200, and can also be used as an auxiliary device to expand the functions of the user device and improve processing performance thereof, etc.

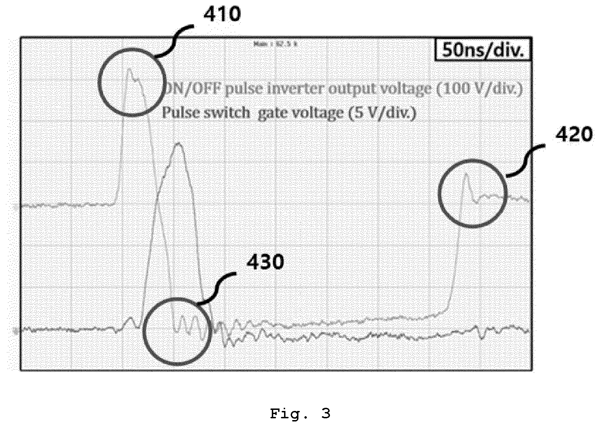

FIG. 3 shows a schematic configuration diagram of a server 120 system including a simulator according to one embodiment of the present invention.

The control unit 310 performs similar function to the control unit 240 in the user device. It represents processing units for processing information on a server, and detailed function of each unit is as follows.

The input value processing unit 311 recognizes or distinguishes input from the user device, connects the inputted value to a modeled element block and stores it in the memory unit 330. Or, it provides functions to process documents that contain specifications of components/elements/modules, actual input/output diagrams used in hardware experiments, etc.

The user information processing unit 312 processes information to be transmitted to the user or processes information received from the user and transmits it to the user.

The image processing unit 313 provides a function for distinguishing element blocks by generating an object name for each element block.

The signal processing unit 320 performs operations such as processing signals on the characteristics of the selected element block and on the input of the element block and transmits the results to the user device 200.

The memory unit 330 can store information or user information which are used in the simulator such as generated element block information, element block connections, inputted parameter values, system configuration diagram and output results. Element block information, etc. generated by multiple users can be distinguished using the object name generated in the image processing unit, and the user information processing unit 312 can use not only the user's information but also element block information generated by other users stored in the memory unit or previously stored element block information, etc.

The memory unit 330 can transmit/receive some or all of the stored information to/from the user device 200 via a network or share them.

Even when a user connects to a server and uses it as a terminal, the user system can operate without deviating from its original purpose, although the roles of each functional part may be reduced/expanded.

Possible functions in the user device and the server device have been described above, but if function conflicts occur, smooth operation can be achieved by removing/adding them from/to the user device or server device.

A network device for supporting network transmission between the server device and user device can use wired/wireless Internet, mobile communication technologies such as LTE (Long Term Evolution), LTE-A (Long Term Evolution-Advanced) and 5G (Fifth Generation).

The server device 300 can perform information transmission with multiple user devices.

Generating a new element block involves generating an element block that does not exist on the user device or server device, and may include adding new characteristics to an existing element block.

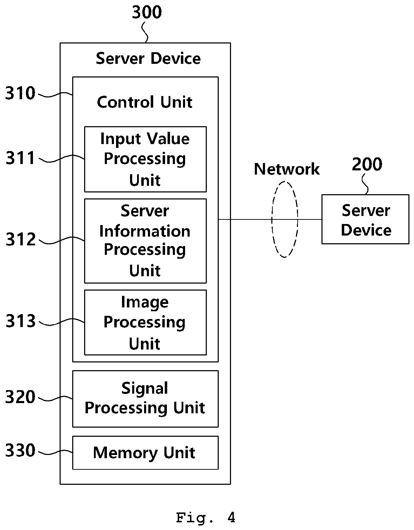

FIG. 4 is an exemplary diagram showing distortion 410, 420 and 430 of pulse waveforms. Although a result without distortion was expected, actual parts/components/modules can produce the same results as FIG. 4. In the existing graphical languages, some distortions can be visualized, but it is not possible to represent the output exactly like FIG. 4.

In the present invention, a result similar to that in FIG. 4 for the same input can be received as input to the image recognition unit S501 of the user device, and characteristics can be extracted through the input value processing unit S502. The results obtained through repeated experiments on the same part/component/module can be inputted and designated as the output characteristics of one element block, and the results can be utilized in various ways such as probabilistically modeling the characteristics through signal processing or machine learning.

S504 can perform a function to convert characteristics to be registered in the server into information or convert characteristics to be registered in the user image processing unit 243 into information, and S505 generates an object to use the new element block generated in such a way. If necessary, it can decide to send the characteristics information to the server, and the characteristic information sent to the server is processed to generate an object in the server.

In addition to the result characteristics, specification or performance graphs, etc. indicated in the specification of part/component/module can be used as inputs to the image recognition unit, and can be inputted in a file format that is easy to recognize, such as jpg or pdf.

In S502, characteristics can be automatically extracted in a manner specified by a user or server, and at this time, the user can select or change some of the extracted characteristics by specifying a method for extracting the necessary characteristics.

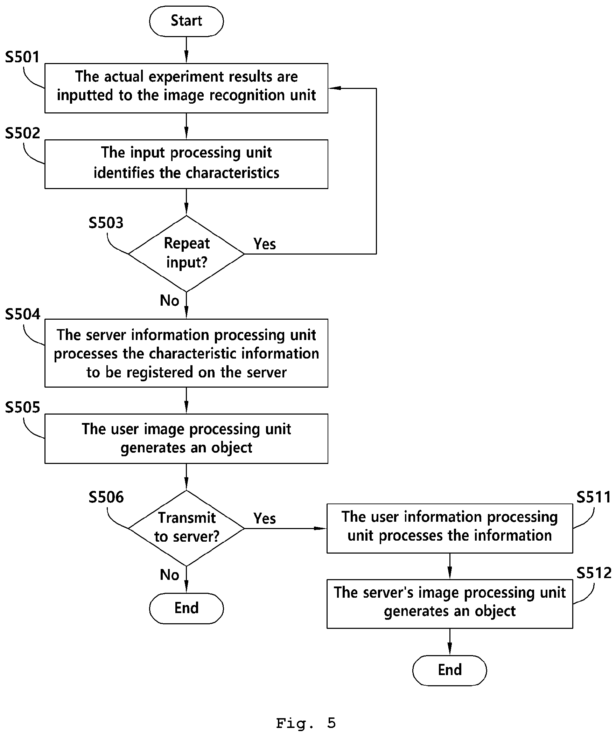

In order to add the resultant characteristics shown in Fig. 4 to the existing element block, the characteristics can be added through an update processing of the existing block rather than generating a new block. The update processing of the existing block can perform the same processing as shown in FIG. 5 after selecting the element block to be updated. In S505 and S512, objects can be generated with a new element block that are distinct from the existing element block.

In existing simulator, whether a connection is possible is determined using some information such as the data type between connected element blocks and the like. For example, the connection of vector and scalar values is not possible, but if the type of information being connected matches, the element block is connected without a problem. This only matches the interface of the element block, so it is necessary to check whether the normal result is outputted immediately after connecting the element block.

The present invention proposes a novel element block connection method, wherein when inputting the parameter value of the last element block to be connected, etc. is completed, a candidate element block that can use the element is presented on the screen. Therefore, this makes it easy to see the composition of element blocks in the system and whether element block parameter values have changed, based on which candidate element blocks are shown as well as which element blocks are being connected.

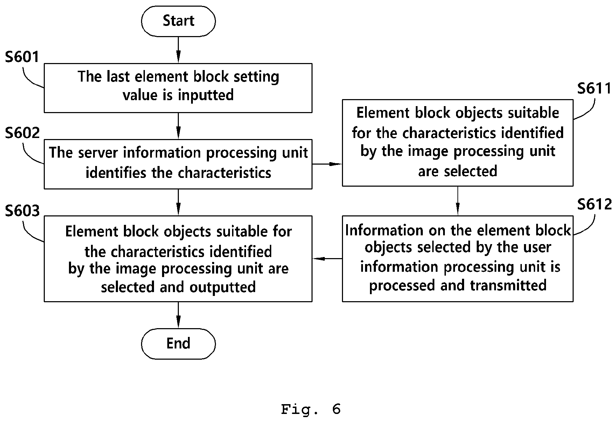

FIG. 6 shows a flowchart for presenting element block candidates. To present element blocks to be added, the object name and input value of the last element block to be added for connection are identified in S602, and suitable candidate element blocks can be selected in S603 and S611.

In S602, it is also possible to identify the characteristics that determine the element block to be added using not only the last element block setting value but also the object name and input value of the element block before the last element block.

By using the present invention, in addition to presenting additional element block candidates, it is also possible to not use some of the characteristics of the added element block or to restrict the input value.

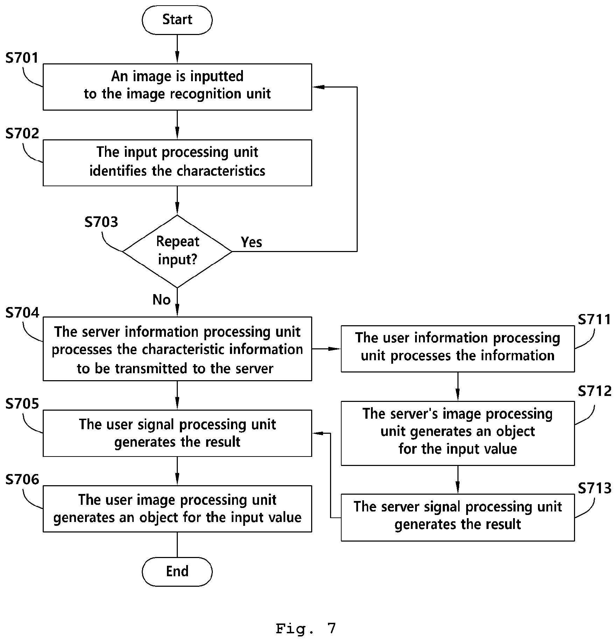

As above-mentioned as the problem, the existing simulator only allow element block parameter values to be inputted in a set range. In particular, inputs that are difficult to convert into formulas become impossible to input accurately. For example, if the result of a new element block generated through FIG. 5 is as in FIG. 4, the input of the next element block becomes FIG. 4. Therefore, input such as FIG. 4 can be processed by the following process as shown in FIG. 7, and input is exemplified in the figure.

After the inputted image is processed by the input processing unit to identify its characteristics (S702), the server information processing unit 242 can classify the parts that need to be transmitted to the server or independently processed. Therefore, each can perform signal processing, such as S705 and S713. In S711, the memory is searched to see if the relevant input exists as an object, and if not, a new object is created in S712. If not, S712 can be omitted and an operation can be performed directly in S713.

The user's image processing unit 243 can create an object by analyzing the input value on its own, or it can create an object by copying object information created from a server.

Traditionally, it was possible to summarize and output the result of a configured system or the value of element blocks of the configured system, etc. However, in the present invention, it is possible to present a direction for system configuration by storing the history of changes to element block setting value and referencing the setting value other than the final setting value. This feature makes it easy to understand the impact of changing the element block of the configured system or the element block parameter values thereof.

By using this, multiple systems can be created by inputting multiple final setting values for one system, and the various input-to-output values can be compared between each system.

The element block generated in the present invention can be processed as a black box if they are not intended to be disclosed to the outside. That is, a designated user can view the characteristics of the element block, but other users may have restrictions on the characteristics.

Traditionally, the lines for connecting element blocks were lines for signal transmission, and only the data type for connecting element blocks was considered. However, in optical communications or quantum information technology, when connecting element blocks using optical cables, the characteristics, length, degree of twisting and so on of the optical cable have a significant impact on signal transmission. Therefore, in the present invention, the optical cable is also treated as one element block.

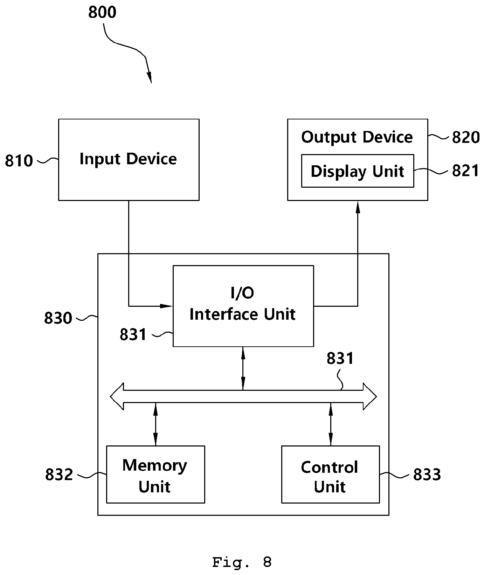

FIG. 8 is a drawing exemplarily showing the configuration of a simulation device 800 in a quantum communication circuit according to one embodiment of the present invention.

Referring to FIG. 8, the simulation device 800 includes an input device 810, an output device 820 and a processing device 830. The simulation device 800 may be implemented in the form of a desktop, laptop, smartphone, tablet PC, etc.

The input device 810 receives a series of inputs (actions requesting to execute arbitrary functions) from a user who wishes to model and simulate an arbitrary quantum communication circuit through the simulation device 800, and transmits a signal requesting to execute a function associated with each input to the processing device 830. The input device 810 may be one or a combination of two or more of known input means such as a keyboard, mouse, touch panel, etc.

The output device 820 includes at least a display unit 821, and the display unit 821 displays a simulation screen based on a control command from the processing unit 830. The output device 820 may further include a speaker. The speaker can generate an auditory signal corresponding to a simulation situation of the quantum communication circuit based on a control command from a processing unit 830.

The processing unit 830 includes an input/output interface unit 831, a memory unit 832, a control unit 833, and a data bus 834 that communicatively connects them.

The input/output interface unit 831 transmits a user request from the input device 810 to the control unit 833, and the control unit 833 processes the user request and transmits an output signal generated by the process to the output device 820.

The memory unit 832 records computer programs and/or data required for virtual modeling and simulation of a quantum communication circuit. The memory unit 832 may include at least one or two or more types of storage medium from among a flash memory type, a hard disk type, an SSD (Solid State Disk type), an SDD (Silicon Disk Drive type), a multimedia card micro type, a random access memory (RAM), a static random access memory (SRAM), a read-only memory (ROM), an electrically erasable programmable read-only memory (EEPROM) and a programmable read-only memory (PROM). The memory unit 832 includes a storage medium in which a computer program embedded with instructions for executing the simulation method according to the present invention is stored.

The control unit 833 is operably coupled to the input/output interface unit 831 and the memory unit 832 and controls the overall operations of the simulation device 800. The control unit 833 may include at least one of ASICs (application specific integrated circuits), DSPs (digital signal processors), DSPDs (digital signal processing devices), PLDs (programmable logic devices), FPGAs (field programmable gate arrays), microprocessors, and other electrical units for performing functions.

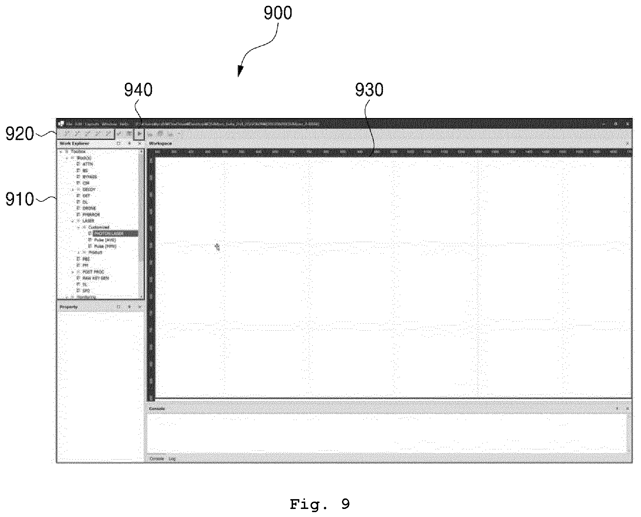

FIG. 9 illustrates the overall layout of the simulation screen provided by the simulation device 800 of FIG. 8.

Referring to FIG. 9, the display unit 821 displays a simulation screen 900 based on an output signal from the control unit 833.

The simulation screen 900 is divided into at least three sub-areas and includes a first selection window 910, a second selection window 920 and a work window 930. Each of the first selection window 910, the second selection window 920 and the work window 930 is any one area defined in the simulation screen 900.

The first selection window 910 is an area where multiple element items that are one-to-one related to multiple element blocks that can be used for modeling a quantum communication circuit are displayed. The multiple element items can be disposed in a tree structure, and each element item can be displayed in the form of a unique name or icon to distinguish it from other element items.

The second selection window 920 is an area where multiple connection line items that are one-to-one related to multiple block connection lines that can be used for modeling a quantum communication circuit are displayed. Each connection line item can be displayed in the form of a unique name or icon to distinguish it from other connection line items.

The work window 930 is an area where the element item selected in the first selection window 910 and the block connection lines selected in the second selection window 920 are disposed, and displays a virtual modeling process of a quantum communication circuit to the user.

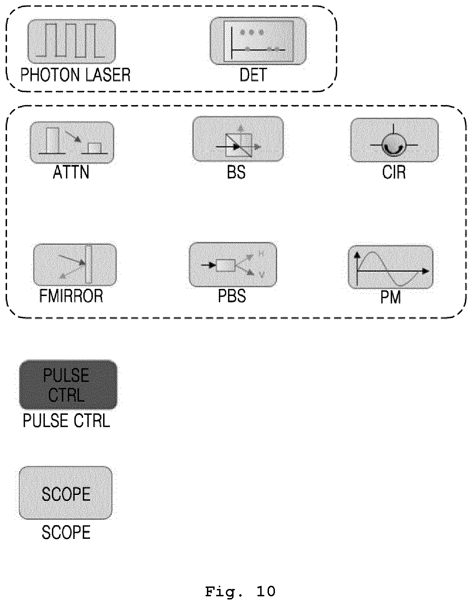

FIG. 10 illustrates various element blocks that can be disposed in a work window 930 of the simulation screen 900 shown in FIG. 9.

Referring to FIG. 10, a photon laser (hereinafter, symbolized by 'PHOTON LASER' or 'LASER') is a source of an optical signal and is an element block that generates the photon laser (PHOTON LASER) pulse. The photon laser (PHOTON LASER) is a unidirectional optical element block in that it outputs optical signals and does not receive optical signals from other element blocks. The characteristics of the optical signals outputted from the photon laser (PHOTON LASER) can be determined by setting parameters regarding peak power, average power, pulse width, pulse interval, etc.

A photon detector (symbolized by 'DET') is a block of components that detects photons of an optical signal. It is a unidirectional optical element block that detects an input optical signal with a size greater than a preset threshold and measures the number of detected photons. The characteristics of the photon detector (DET) can be determined by setting parameters such as detection efficiency and detection threshold.

An attenuator, each of a beam splitter (BS), a circulator (CIR), a delay line (DL), a faraday mirror, a polarization beam splitter (PBS), a phase modulator (PM), a storage line (SL), an intensity modulator (PM) and a wave plate are a bidirectional optical element block that can configure a transmission path for an optical signal.

An attenuator (symbolized by 'ATTN') attenuates the intensity of the optical signal which is outputted from the photon laser (PHOTON LASER) and propagated in the quantum communication circuit. The characteristics of the attenuator (ATTN) can be determined by setting parameters regarding attenuation rate, attenuation time (timing), etc. Each port of the attenuator (ATTN) can be used for both input and output of optical signals. In particular, the attenuation timing can be controlled by an electrical signal generated from the electrical element after connecting an electric component (pulse controller) to a controlled port of the attenuator instead of setting the parameter.

The beam splitter (symbolized by 'BS') has four ports (optical signal ports), and each port can be used for both input and output. The beam splitter (BS) is a component that can split an optical signal inputted to each of its ports or combine optical signals inputted to two or more ports and output the combined optical signal to at least one of the remaining ports. As an example, an optical signal inputted to port 1 of a beam splitter (BS) may be split at a certain ratio (e.g., 50:50) and outputted to ports 3 and 4, and optical signals inputted simultaneously to ports 3 and 4 may be combined together and outputted to ports 1 and 2 at a certain ratio (e.g., 50:50). The characteristics of a beam splitter (BS) can be determined by setting parameters regarding the split ratio, the position of the coating surface of the mirror, etc. A mirror is provided in the beam splitter (BS), and one surface of the mirror may have a coating surface (e.g., a dielectric layer, etc.) attached thereto. The position of the coating surface of the mirror indicates any one surface to which the coating surface is attached among the upper and lower surfaces of the mirror. The attachment position of the coating surface to the mirror can determine the input/output relationship between the optical signal inputted to the beam splitter (BS) and the optical signal outputted from the beam splitter (BS).

The circulator (symbolized by 'CIR') has three ports. The signal connection relationship between ports 1, 2 and 3 of the circulator (CIR) can be determined by setting the component parameters. For example, an optical signal inputted to port 1 of the circulator (CIR) is outputted to port 2, an optical signal inputted to port 2 of the circulator (CIR) is outputted to port 3, and an optical signal inputted to port 3 of the circulator (CIR) is outputted to port 1. At this time, considering signal leakage in the circulator (CIR), some of the optical signals inputted to port 1 may be set to be outputted to port 3.

A delay line (symbolized by 'DL') is a type of optical signal line made of fiber, and is responsible for generating a time delay for the optical signal inputted thereto. The parameter items defining the characteristics of the delay line (DL) can basically include the parameter items of the block connection line described below.

A Faraday mirror (symbolized by 'FMIRROR') is a component that rotates the polarization direction of an inputted optical signal by 90° and reflects it. That is, the polarization directions of the optical signal before reflection and the optical signal after reflection by the Faraday mirror (FMIRROR) are perpendicular to each other. Therefore, when an optical signal with H (horizontal) polarization is inputted to the Faraday mirror (FMIRROR), an optical signal with V (vertical) polarization is outputted from the Faraday mirror (FMIRROR). Similarly, when an optical signal with V polarization is inputted to the Faraday mirror (FMIRROR), an optical signal with H polarization is outputted from the Faraday mirror (FMIRROR). The characteristics of the Faraday mirror (FMIRROR) can be determined by setting parameters regarding the mirror type, etc.

A polarization beam splitter (symbolized by 'PBS') has three ports, each of which can be used for both input and output. The polarizing beam splitter (PBS) can separate the horizontal polarization component (H polarization) and the vertical polarization component (V polarization). Like the beam splitter (BS) described above, the polarizing beam splitter (PBS) is also an element block that simulates a bidirectional optical element, and thus can also be used to combine two polarization components that are perpendicular to each other. The optical signals inputted to ports 1 and 2 of the polarizing beam splitter (PBS) are outputted to port 3, and the optical signals inputted to port 3 are outputted to ports 1 and 2. Depending on the polarization, an optical signal may not be outputted from port 3 even if it is inputted to port 1 or port 2 of a polarizing beam splitter (PBS), and an optical signal inputted to port 3 of the polarizing beam splitter (PBS) may be outputted from only one of ports 1 and 2, or may be outputted from ports 1 and 2 simultaneously. At this time, the optical signal inputted to port 1 of the polarizing beam splitter (PBS) is not outputted to port 2, and the optical signal inputted to port 2 is not outputted to port 1. The characteristics of the polarizing beam splitter (PBS) can be determined by setting parameters regarding polarization type and port mapping relationship according to the polarization.

A phase modulator (symbolized by 'PM') is an element block that modulates the phase of pulse of an optical signal inputted to one of its two ports and outputs it to the other port. As one example, in the BB84 protocol, the phase modulator (PM) on the transmitter (Alice) side modulates the phase of the optical signal inputted to it to one of four (0, π/2, π, 3π/2) and outputs it, and the phase modulator (PM) on the receiver (Bob) side modulates the phase of the optical signal inputted to it to one of two (0, π/2) and outputs it. The operation of the phase modulator (PM) can be controlled based on the magnitude and waveform of an electrical signal (e.g., voltage) inputted from an electrical component (pulse controller) connected to the phase modulator (PM). The electrical element connected to the phase modulator (PM) converts digital information that one of the transmitter and receiver wants to transmit to the other into an electrical signal and outputs it to the phase modulator (PM), and the phase modulator (PM) performs an encoding process on an optical signal based on the electrical signal from the electrical element. The characteristics of the phase modulator (PM) can be determined by setting parameters regarding the mapping relationship between the electric signal and the phase, the type of distinguishable phase, the phase value, etc.

A storage line (symbolized by 'SL') is a type of optical signal line made of fiber, similar to the delay line (DL) and is responsible for generating time delay. In a two-way BB84 protocol, the storage line (SL) temporally separates the optical signal that has not passed through the Faraday mirror (FMIRROR) from the optical signal reflected from the Faraday mirror (FMIRROR), so that only the phase of the pulse of the optical signal that is reflected from the Faraday mirror (FMIRROR) and returned to the receiver can be modulated by the phase modulator (PM) on the transmitter side. Typically, it can be set to generate a longer time delay than the delay line (DL). Also, it can remove noise caused by a Rayleigh backscattering that occurs when the optical signal travels through the storage line (SL).

Additionally, an element block for simulating known quantum communication component such as an intensity modulator and a wave plate may be provided.

The simulation device 800 provides, in addition to the unidirectional optical element block and bidirectional optical element block described above, a control block (PULSE CTRL) and a monitoring block (scope) that can be utilized for virtual modeling of a quantum communication circuit as additional element blocks.

The control block (symbolized by 'PULSE CTRL') indicates the afore-mentioned electrical component (pulse controller) and is connected to other element blocks via block connection lines to generate electrical signals (e.g., voltage pulses) for controlling other connected element blocks. The characteristics of the control block (PULSE CTRL) can be determined by setting parameters regarding pulse type, upper electrical signal limit, lower electrical signal limit, electrical signal generation timing, pulse width, pulse interval, etc.

A circulator (CIR), a beam splitter (BS), a polarizing beam splitter (PBS), a delay line (DL), a storage line (SL), and a Faraday mirror (FMIRROR) can independently configure a transmission path of an optical signal without connection to the control block (PULSE CTRL). Of course, a beam splitter (BS), etc. can be implemented to change the distribution ratio of the optical signal depending on the electrical signal. The photon laser (PHOTON LASER) and photon detector (DET) can also be implemented to operate independently without connection to the control block (PULSE CTRL), or to operate dependently on an electrical signal from the control block (PULSE CTRL).

The control block (PULSE CTRL) connected to the attenuator (ATTN) can control the attenuation time or attenuation rate of the optical signal by the attenuator (ATTN). As one example, when the control block (PULSE CTRL) outputs the electrical signal of 1V to the attenuator (ATTN), the attenuator (ATTN) can attenuate the power of the optical signal inputted thereto by 1dB, and when the control block (PULSE CTRL) outputs the electrical signal of 3V to the attenuator (ATTN), the attenuator (ATTN) can attenuate the power of the optical signal inputted thereto by 10dB.

The control block (PULSE CTRL) connected to the phase modulator (PM) can adjust the phase value modulated by the phase modulator (PM). As one example, when the control block (PULSE CTRL) outputs the electrical signal of 2.5V to the phase modulator (PM), the phase modulator (PM) can change the phase of an optical signal inputted thereto by 90 degrees, and when the control block (PULSE CTRL) outputs the electrical signal of 5V to the phase modulator (PM), the phase modulator (PM) can change the phase of an optical signal inputted thereto by 180 degrees.

A monitoring block (symbolized by 'scope') is connected to other element blocks through block connection lines, and checks (obtains) operation information of other connected element blocks (e.g., setting value for each parameter item, information required for the results of each element block).

The results confirmed in the monitoring block (scope) may represent not only the final results (e.g., whether an optical signal is inputted, the inputted optical signal magnitude, etc.) detected by the photon detector (DET), but also the intermediate results (e.g., the optical signal magnitude, the optical signal phase, etc.) associated with each element block during or after the simulation is executed. Required information is information used in the process of checking the intermediate results to determine the cause of the final results after confirming the final results. For example, if the result is that an optical signal has not been detected from a photon detector (DET), information such as the phase information of the optical signal inputted to or outputted from the phase modulator (PM) may be information required as an intermediate result. Even if the final simulation results for a virtually modeled quantum communication circuit are not verified through the photon detector (DET), the intermediate results can be monitored to verify that the phase of the optical signal inputted to or outputted from a specific element block is performed as intended.

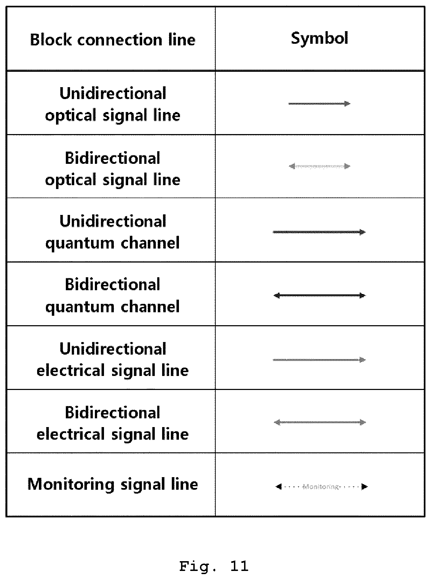

FIG. 11 illustrates various block connection lines that can be disposed in the work window 930 of the simulation screen 900 illustrated in FIG. 9.

Referring to FIG. 11, the unidirectional optical signal line simulates a cable that transmits an optical signal in one direction. The unidirectional optical signal line is used to connect a pair of optical element blocks.
One end and the other end of the unidirectional optical signal line may represent the starting point and the ending point of the optical signal, respectively. For example, the starting point of the unidirectional optical signal line may be connected to an output port of a photon laser (PHOTON LASER), etc., and the ending point of the unidirectional optical signal line may be connected to an input port of the photon detector (DET), etc.

The bidirectional optical signal line is one that simulates a cable that transmits optical signals in both directions. The bidirectional optical signal line, similar to the unidirectional optical signal line is used to connect a pair of optical element blocks. Unlike the unidirectional optical signal line, the two ends of the bidirectional optical signal line are not limited to for either input or output, and each end can be used for both input and output. For example, one of the input/output ports provided in the beam splitter (BS) and one of the input/output ports provided in the polarizing beam splitter (PBS) can be interconnected via the bidirectional optical signal line. For reference, the bidirectional optical signal line may not be used to connect a photon laser (PHOTON LASER) or a photon detector (DET) to other bidirectional optical element block.

The unidirectional quantum channel is used to connect a pair of optical element blocks, in common with the unidirectional optical signal line. The unidirectional quantum channel can be defined as a type of unidirectional optical signal line in a broad sense and can be defined as a unidirectional optical signal line used for a special purpose (e.g., connection between a transmitter and a receiver) in a narrow sense.

The bidirectional quantum channel is used for connection between a pair of optical element blocks, commonly with the bidirectional optical signal line. The difference between the bidirectional quantum channel and the bidirectional optical signal line can be common with the difference between the unidirectional quantum channel and the unidirectional optical signal line.

The parameter items that can be set for a unidirectional quantum channel basically include the parameter items that can be set for a unidirectional optical signal line, and may further include parameter items such as the presence or absence of an eavesdropper, eavesdropping characteristics, phase error probability and polarization error probability. An eavesdropper means someone who attempts to intercept information transmitted or received in a quantum communications circuit or interfere with the transmission of information. By disposing a one-way quantum channel or a two-way quantum channel in a part of the quantum communication circuit that the user wants to model where there is a possibility of an eavesdropper's interference, the user can verify in advance the difference in the presence or absence of the eavesdropper in the relevant part through simulation results. If the eavesdropper is set to be present, the signal's strength or phase in a one-way quantum channel or a two-way quantum channel may change. Conversely, if the eavesdropper is set to be absent, only the same characteristics as the unidirectional or bidirectional optical signal lines can be monitored. For reference, the characteristics of the eavesdropping operation depend on the eavesdropper's modus operandi, such as whether they simply intercept photons transmitted over a one-way quantum channel or a two-way quantum channel, or whether they intercept and then retransmit them, or on the number of photons (e.g. one or more) they wish to intercept. It is a term that describes wiretapping methods such as one, multiple, etc.

A unidirectional electrical signal line is one that has simulated a connection line through which electrical signals are transmitted and is used for electrical signal connections between a pair of control blocks (PULSE CTRL) or between electrical component and optical element block.

The bidirectional electrical signal line is used for electrical signal connection between a pair of control blocks (PULSE CTRL) or between electrical component and optical element block, commonly with the unidirectional electrical signal line. In contrast to the unidirectional electrical signal line, the bidirectional electrical signal line has the function of not only transmitting electrical signals from the control block (PULSE CTRL) to the optical element block, but also feeding back electrical signals from the optical element block to the control block (PULSE CTRL).

The optical element block that can be connected to the control block (PULSE CTRL) via a unidirectional electrical signal line or a bidirectional electrical signal line is limited to optical element block that performs specific function or operation depending on the electrical signal inputted thereto, like the attenuator (ATTN) and phase modulator (PM) discussed above.

A monitoring signal line is a virtual cable used to transmit operation information (e.g., result value, parameter setting value, etc.) of other element block connected there to the monitoring block (scope), unlike optical signal line, quantum channel and electrical signal line that simulate actual physical connection line. Because the monitoring signal line is a virtual cable, it can be connected to all element blocks regardless of block type, unlike optical signal line, quantum channel and electrical signal line.

In FIG. 11, various types of arrow symbols are used to illustrate how each block connection line is visually distinct from other block connection lines, but this is only one example.
That is, instead of arrows, other symbols may be implemented to indicate block connection lines, or arrows of a different style than the arrows illustrated in FIG. 11 may be implemented to indicate block connection lines. Alternatively, all block connection lines disposed in the work window 930 are indicated with the same symbol (e.g., solid line), and the user can set the type and characteristics of each block connection line by manipulating the simulator screen 900 using the input device 810.

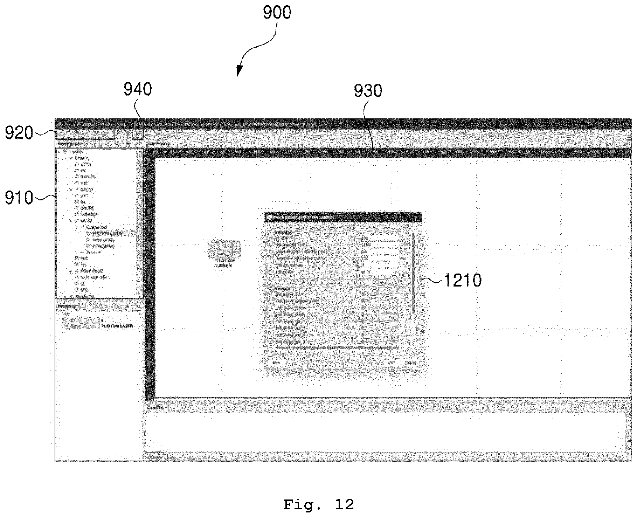

FIG. 12 is a drawing that is referenced to exemplarily explain the process of disposing element blocks in the work window 930 of the simulation screen 900 illustrated in FIG. 9.

Referring to FIGS. 9 to 12, in response to the first circuit modeling request action, the control unit 833 controls the display unit 821 to display an element block associated with a component item selected in the first selection window 910 in a state of having been disposed in the work window 930.

The first circuit modeling request action is an input action to request selection of a specific component item being displayed in the first selection window 910 and display of an element block associated with the selected specific component item in the work window 930, which may include at least one of drag and drop and double-click. For example, when a user manipulates a mouse provided as an input device 810 to drag and drop a specific element item in the first selection window 910 to the task window 930 or double-clicks a specific element item in the first selection window 910, an element block associated with the specific element item is displayed in the task window 930. FIG. 12 illustrates an example in which a photon laser (PHOTON LASER), one of a plurality of element blocks, has been first disposed in the work window 930 in response to the first circuit modeling request action.

The first circuit modeling request action may further include setting a component parameter for a specific element block. Setting the component parameter may be an action of inputting, modifying or removing a value of at least one predefined parameter item that represents a characteristic of a specific device block displayed in the work window 930. For example, as illustrated in FIG. 12, when setting a component parameter for a photon laser (PHOTON LASER) in the work window 930, an editing window 1210 that can set parameter items (e.g., peak power, average power, pulse width, pulse interval, phase, polarization, etc.) representing the characteristics of an optical signal outputted from the PHOTON LASER may be displayed in a pop-up.

In the process of virtual modeling in a quantum communication circuit, the first circuit modeling request action may occur multiple times with a time difference, and the control unit 833 may additionally display a new element block in the work window 930 or set the characteristics of each element block already being displayed each time the first circuit modeling request action occurs.

When two or more homogeneous element blocks are disposed in the work window 930, additional marks (e.g., _1, _2, _A, _B) may be automatically displayed to distinguish each element block from other homogeneous element blocks.

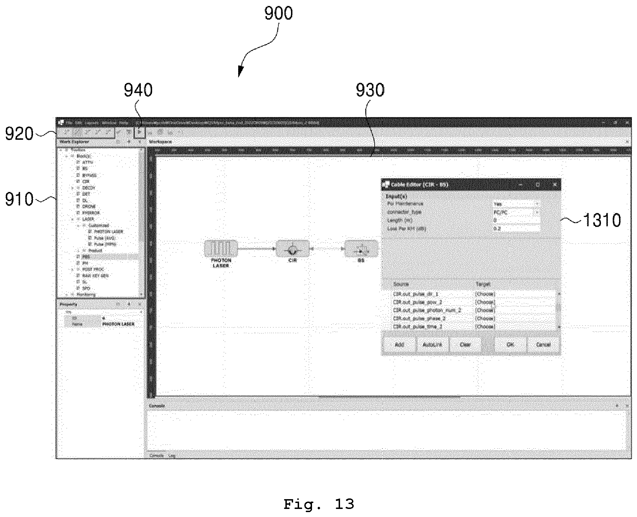

FIG. 13 is a drawing that is referenced to exemplarily explain the process of disposing a block connection line in the work window 930 of the simulation screen 900 illustrated in FIG. 9.

Referring to FIGS. 9 to 13, in response to a second circuit modeling request action, the control unit 833 controls the display unit 821 to display a block connection line associated with the connection line item selected in the second selection window 920 in a state in which it has been disposed in the work window 930.

The second circuit modeling request action is an input action for request selection of a specific connection line item being displayed in the second selection window 920 and display of a block connection line associated with the selected specific connection line item in the work window 930, which may include at least one of drag and drop and double-click. For example, when a user manipulates a mouse provided as an input device 810 to drag and drop a specific connection line item in the second selection window 920 to the task window 930 or double-click a specific connection line item in the second selection window 920, the block connection line associated with the specific connection line item is displayed in the task window 930.

The second circuit modeling request action may further include setting a connection parameter for a specific block connection line. Setting the connection parameter represents the characteristics of a specific block connection line being displayed in the work window 930 and may be an action of entering, modifying or removing the value of at least one predefined parameter items. For example, as illustrated in FIG. 13, when setting connection parameters for a bidirectional optical signal line in the work window 930, an editing window 1310 that can set parameter items (e.g., peak power, average power, pulse width, pulse interval, phase, polarization, etc.) representing the characteristics of an optical signal outputted from a photon laser (PHOTON LASER) may be displayed in a pop-up.

In the process of virtual modeling in a quantum communication circuit, the second circuit modeling request action may occur multiple times with a time difference, and the control unit 833 may additionally display a new block connection line in the work window 930 each time the second circuit modeling request action occurs, or change the characteristics of each block connection lines already being displayed.

The control unit 833 may, in response to the third circuit modeling request action, display each of the plurality of block connection lines disposed in the work window 930 to be connected between any two element blocks of the plurality of element blocks disposed in the work window 930. The third circuit modeling request action may include dragging and dropping from one of the two element blocks to the other. FIG. 13 illustrates an appearance that in response to a series of second and third circuit modeling request actions, a unidirectional optical signal line is connected between a photon laser (PHOTON LASER) and a circulator (CIR) disposed in the work window 930, and a bidirectional optical signal line is connected between a circulator (CIR) and a beam splitter (BS) disposed in a work window 930.

At least one pair of element blocks among the plurality of element blocks disposed in the working window 930 are interconnected by any one block connection line among the plurality of block connection lines disposed in the working window 930 to enable bidirectional transmission of an optical signal. As will be described later, interconnecting any two element blocks to enable bidirectional transmission of optical signals means that the two element blocks are connected by a bidirectional optical signal line or a bidirectional quantum channel.

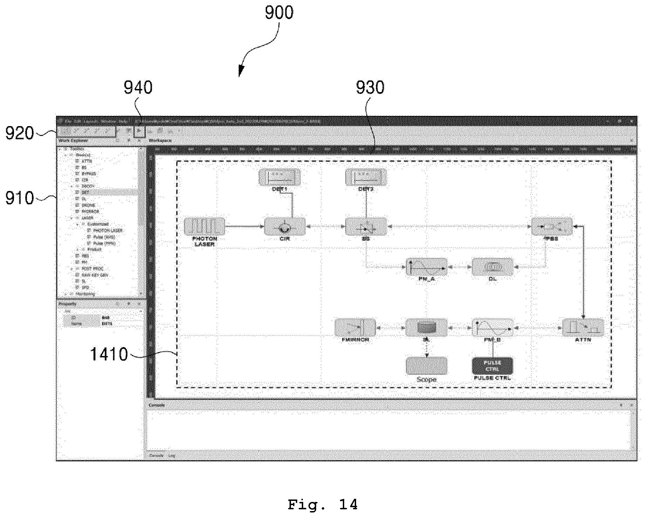

FIG. 14 is a drawing for reference in explaining an example of a quantum communication circuit virtually modeled in the work window 930 of the simulation screen 900 illustrated in FIG. 9.

In Fig. 14, the quantum communication circuit 1400 displayed in the work window 930 is one that a two-way BB84 protocol has been virtually modeled using phase coding. The BB84 protocol is a widely used protocol for two users (transmitter and receiver) to securely share a secret key using a quantum.

In a quantum communication circuit 1400, a part (from an attenuator (ATTN) to a Faraday mirror (FMIRROR)) associated with a transmitter and a part (from a photon laser (PHOTON LASER) to a polarizing beam splitter (PBS)) associated with a receiver are connected by a bidirectional quantum channel.

The quantum communication circuit 1400 includes two phase modulators (PM_A, PM_B) and two photon detectors (DET1, DET2) as homogeneous element blocks. In this case, marks (e.g., _A and _B) that allow two phase modulators (PMs) to be distinguished from each other and marks (e.g., 1 and 2) that allow two photon detectors (DETs) to be distinguished from each other can be automatically displayed in the work window 930.

From now on, the transmission process of an optical signal in a quantum communication circuit 1400 will be described by way of example with reference to Fig. 14.

First, a photon laser (PHOTON LASER) is connected to port 1 of a circulator (CIR) via a unidirectional optical signal line, and an optical signal (including at least one pulse trains) generated by the photon laser (PHOTON LASER) is inputted to the port 1 of the circulator (CIR) via the unidirectional optical signal line. For reference, unlike in FIG. 14, it is perfectly all right to redispose the unidirectional optical signal line connecting the photon laser and the circulator (CIR) with a bidirectional optical signal line. That is, even if an optical signal is inputted to the photon laser, the operation of the photon laser is not affected, so it is possible to connect the photon laser to the circulator (CIR) using a bidirectional optical signal line, and in this case, the bidirectional optical signal line connecting the photon laser and the circulator (CIR) has substantially the same function as the unidirectional optical signal line.

An optical signal inputted to port 1 of the circulator (CIR) is outputted from port 2 of the circulator (CIR) and inputted to port 1 of a beam splitter (BS) through the bidirectional optical signal line. Port 3 of the circulator (CIR) is connected to the photon detector (DET1) by the unidirectional optical signal line.

The optical signal inputted to port 1 of the beam splitter (BS) is split at a certain ratio inside the beam splitter (BS) and outputted from ports 3 and 4. At this time, the optical signal split by the beam splitter (BS) is outputted from port 3 of the beam splitter (BS) and inputted to port 1 of the polarizing beam splitter (PBS) through a bidirectional optical signal line. At this time, due to the characteristics of port 1 of the polarizing beam splitter (PBS), only the H polarization of the optical signal can be inputted to port 1 of the polarizing beam splitter (PBS).
The optical signal split by the beam splitter (BS) is outputted from port 4 of the beam splitter (BS) and inputted to port 1 of the phase modulator (PM_A) through the bidirectional optical signal line. The optical signal inputted to port 1 of a phase modulator (PM_A) is outputted from port 2 of the phase modulator (PM_A) and inputted to port 1 of a delay line (DL) through the bidirectional optical signal line. The optical signal inputted to port 1 of a delay line (DL) is outputted from port 2 of the delay line (DL) and inputted to port 2 of a polarizing beam splitter (PBS) through a bidirectional optical signal line. Due to the characteristics of port 2 of the polarizing beam splitter (PBS), only V polarization of the inputted optical signal is inputted to port 2 of the polarizing beam splitter (PBS). At this time, the path from port 3 of the beam splitter (BS) to port 1 of the polarizing beam splitter (PBS) may be called a short path, and the path from port 4 of the beam splitter (BS) to port 2 of the polarizing beam splitter (PBS) may be called a long path.

When an optical signal is transmitted from port 4 of the beam splitter (BS) to port 2 of a polarizing beam splitter (PBS) through the long path, the phase modulation operation of a phase modulator (PM_A) located in the long path can be set to stop. That is, if the inherent phase change that is inevitably caused by a cable, etc. in the phase modulator (PM_A) although it is small is ignored, there is no phase difference between the optical signal inputted to port 1 of the phase modulator (PM_A) and the optical signal outputted from port 2. Unlike the short path, there occurs an intended time delay by the delay line (DL) in the optical signal passing through the long path, so that the optical signal being inputted to port 1 of the polarizing beam splitter (PBS) and the optical signal being inputted to port 2 thereof are separated in time.

The optical signal inputted to port 1 of the polarizing beam splitter (PBS) has only H polarization, and the optical signal inputted to port 2 of the polarizing beam splitter (PBS) has only V polarization. Each optical signal inputted to ports 1 and 2 of the polarizing beam splitter (PBS) is outputted from port 3 of the polarizing beam splitter (PBS), passes through the bidirectional quantum channel connected thereto and is inputted to port 1 of the attenuator (ATTN).

The optical signal inputted to port 1 of the attenuator (ATTN) is outputted from port 2 of the attenuator (ATTN) and inputted to port 1 of the phase modulator (PM_B) through a bidirectional optical signal line. The optical signal inputted to port 1 of the phase modulator (PM_B) is outputted from port 2 of the phase modulator (PM_B) and inputted to port 1 of the storage line (SL) through a bidirectional optical signal line. During the process of the optical signal transmission from port 1 to port 2 of the phase modulator (PM_B), the phase modulation operation of the phase modulator (PM_B) can be set to stop. That is, if the inherent phase change that is inevitably caused by a cable, etc. in the phase modulator (PM_B) although it is small is ignored, there is no phase difference between the optical signal inputted to port 1 of the phase modulator (PM_B) and the optical signal outputted from port 2. An optical signal inputted to port 1 of the storage line (SL) is outputted from port 2 of the storage line (SL) and inputted to a Faraday mirror (FMIRROR) through a bidirectional optical signal line.

A Faraday mirror (FMIRROR) reflects an optical signal inputted thereto so that the polarization direction of the inputted optical signal changes to vertical. The optical signal reflected from the Faraday mirror (FMIRROR) is inputted to port 2 of the phase modulator (PM_B) through the storage line (SL). At this time, the phase modulator (PM_B) performs a phase modulation operation to modulate the phase of the optical signal inputted to port 2, and thus encoding on the optical signal is made. And then, the strength of the optical signal outputted from port 2 of the phase modulator (PM_B) to port 2 of the attenuator (ATTN) is attenuated by the attenuator (ATTN) and returns to port 3 of the polarizing beam splitter (PBS) through a bidirectional quantum channel.

The optical signal inputted to port 3 of the polarizing beam splitter (PBS) is outputted to at least one of port 1 and port 2 of the polarizing beam splitter (PBS). Only H polarization can be outputted from port 1 of the polarizing beam splitter (PBS), and only V polarization can be outputted from port 2 of the polarizing beam splitter (PBS). As described above, since the polarization direction of the optical signal has been changed vertically before and after reflection from the Faraday mirror (FMIRROR), the H polarization of the optical signal which had been outputted from port 3 of the polarizing beam splitter (PBS) through the short path is changed to V polarization by the Faraday mirror (FMIRROR) and then inputted to port 3 of the polarizing beam splitter (PBS) and outputted from port 2. Also, the V polarization of the optical signal outputted from port 3 of the polarizing beam splitter (PBS) through the long path is changed to H polarization by the Faraday mirror (FMIRROR), and then inputted to port 3 of the polarizing beam splitter (PBS) and outputted from port 1.

Next, the optical signal outputted from port 1 of the polarizing beam splitter (PBS) is inputted to port 3 of the beam splitter (BS) through the short path, and the optical signal outputted from port 2 of the polarizing beam splitter (PBS) is inputted to port 4 of the beam splitter (BS) through the long path. Here, when the optical signal passes from port 2 of a polarizing beam splitter (PBS) to port 4 of the beam splitter (BS) through a long path, a phase modulation operation is performed by the phase modulator (PM_A) so that the phase of the optical signal is modulated.

The optical signal inputted to each of ports 3 and 4 of the beam splitter (BS) is outputted to ports 1 and 2 of the beam splitter (BS). Port 2 of the beam splitter (BS) is connected to the photon detector (DET2) by a unidirectional optical signal line, and accordingly, the optical signal outputted from port 2 of the beam splitter (BS) is detected by the photon detector (DET2). The optical signal outputted from port 1 of the beam splitter (BS) is inputted to port 2 of the circulator (CIR) through a bidirectional optical signal line. The optical signal inputted to port 2 of the circulator (CIR) is outputted to port 3 of the circulator (CIR). Port 3 of the circulator (CIR) is connected to the photon detector (DET1) by a unidirectional optical signal line, so that the optical signal outputted from port 3 of the circulator (CIR) is detected by the photon detector (DET1). For reference, unlike as illustrated in FIG. 14, it is perfectly all right to redispose the unidirectional optical signal line connecting the circulator (CIR) and the photon detector (DET1) and/or the unidirectional optical signal line connecting the beam splitter (BS) and the photon detector (DET2) with a bidirectional optical signal line.

The control unit 833 can, in response to a simulation request action, execute a simulation for a quantum communication circuit 1400 virtually modeled in the work window 930 by a plurality of element blocks and a plurality of block connection lines disposed in the work window 930. The simulation request action may be a click on an execution button 940 displayed on the simulation screen 900. When executing the simulation for a quantum communication circuit 1400, an operation for processing the transmission process of the optical signal described above with reference to FIG. 14 may be performed by the control unit 833.

In a quantum communication circuit that has the two-way BB84 protocol virtually modeled as discussed above, an optical signal generated at the receiver side is transmitted to the transmitter side through a two-way quantum channel, then reflected by a Faraday mirror (FMIRROR) and returned to a beam splitter (BS).
The optical signal outputted from port 3 of the beam splitter (BS) and returned to port 4 and the optical signal outputted from port 4 of the beam splitter (BS) and returned to port 3 have different orders of the element blocks that they have passed through, but the total path length is the same as the element blocks that they have passed through. For this reason, from the perspective of a beam splitter (BS) that performs destructive interference and constructive interference of the optical signal, it has the advantage of being easy to implement in practice because it has the effect of correcting polarization. That is, the length of the optical signal line (quantum channel), temperature change differences, the characteristics of each element block, etc. can be ignored. If a temperature change occurs in the middle of the path from the outputting from port 3 of the beam splitter (BS) to returning to port 4 and the path from the outputting from port 4 of the beam splitter (BS) to returning to port 3, the total length experienced by each path becomes different, and thus the destructive/constructive interference may not be properly performed by the beam splitter (BS).

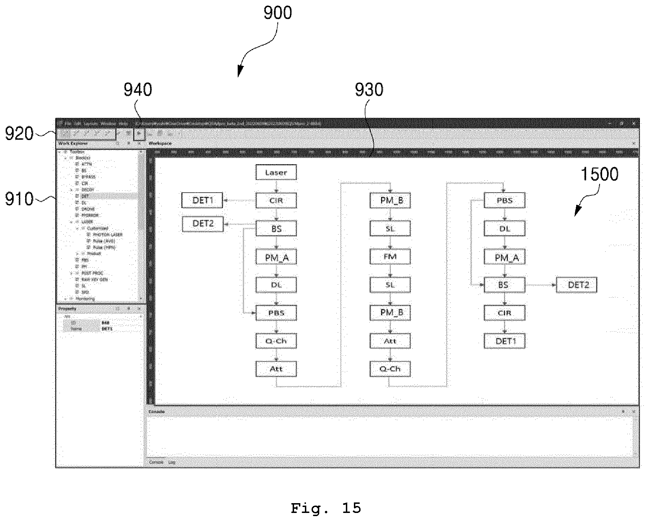

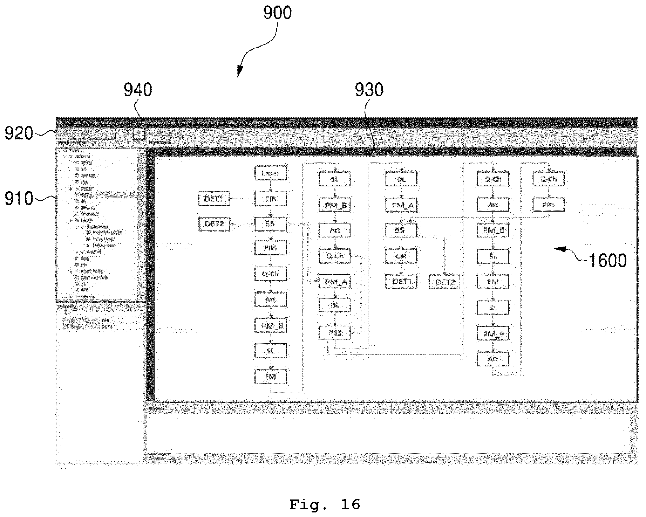

FIG. 15 is a drawing for reference in explaining an example of an equivalent circuit model associated with the quantum communication circuit illustrated in FIG. 14, and FIG. 16 is a drawing for reference in explaining another example of an equivalent circuit model associated with the quantum communication circuit illustrated in FIG. 14.

In FIGS. 15 and 16, the path from the photon laser (PHOTON LASER) to the Faraday mirror (FMIRROR) is depicted as a blue connecting line, the reverse path reflected by the Faraday mirror (FMIRROR) and returned is depicted as a red connecting line, and the short path between the beam splitter (BS) and the polarizing beam splitter (PBS) is depicted as a green connecting line.

The control unit 833 may, in response to a circuit conversion request action, display an equivalent circuit model representing in a one-way form an optical signal transmission path in a target area, which is at least a portion of the entire area of the working window 930 in which a virtually modeled quantum communication circuit is displayed, in the working window 930. Here, the circuit transformation request action may include a drag from one point to another in the work window 930, and the range from the start point to the end point of the drag may be designated as the target area.

The target area may be a range specified by the circuit transformation request action to cover at least two or more element blocks among a plurality of element blocks disposed in the work window 930. At least one pair of element blocks in the target area are interconnected to enable bidirectional transmission of optical signals. The optical signal transmission path in the target area starts from one element block in the target area and ends at another element block.

If there are no at least two interconnected element blocks in the target area that enable bidirectional transmission of an optical signal, the control unit 833 can control the display unit 821 to output a message indicating that re-designation of the target area is necessary.

For convenience of explanation, FIGS. 15 and 16 illustrate equivalent circuit models 1500 and 1600 in the case where an area covering the entire quantum communication circuit 1400 is designated as a target area ('1410' in FIG. 14).

Referring to FIG. 15, an equivalent circuit model 1500 is an equivalent expression of an optical signal transmission path in a quantum communication circuit 1400 described with reference to FIG. 14 in a one-way form. Specifically, when the size of the time delay for the optical signal generated by the delay line (DL) of the long path is set to an appropriate level, so that the optical signal outputted from port 3 of the beam splitter (BS) is inputted to the polarizing beam splitter (PBS) through the short path and then reflected by the Faraday mirror (FMIRROR) before returning to the polarizing beam splitter (PBS), the optical signal output from port 4 of the beam splitter (BS) is input to the polarizing beam splitter (PBS) through the long path, the quantum communication circuit 1400 is expressed as an equivalent circuit model 1500.

On the other hand, referring to FIG. 16, the equivalent circuit model 1600 is an equivalent expression of an optical signal transmission path in a quantum communication circuit 1400 in a unidirectional form, which is different from the content described with reference to FIG. 14. Specifically, if the size of the time delay set in the delay line (DL) of the long path is excessive, a large time difference may exist between the time of inputting the optical signal from port 3 of the beam splitter (BS) to port 1 of the polarizing beam splitter (PBS) and the time of inputting the optical signal from port 4 of the beam splitter (BS) to port 2 of the polarizing beam splitter (PBS). Due to this, at the time of inputting the optical signal from port 4 of the beam splitter (BS) to port 2 of the polarizing beam splitter (PBS), a situation may occur where the optical signal inputted to port 1 of the polarizing beam splitter (PBS) and outputted from port 3 is reflected by the Faraday mirror (FMIRROR) and inputted again to port 3 of the polarizing beam splitter (PBS). That is, the optical signal inputted to the polarizing beam splitter (PBS) through the long path meets the optical signal inputted to the polarizing beam splitter (PBS) through the short path and then reflected by the Faraday mirror (FMIRROR) at the polarizing beam splitter (PBS).

Comparing the equivalent circuit model 1500 of Fig. 15 with the equivalent circuit model 1600 of Fig. 16, it can be confirmed that the overall optical signal transmission path in the quantum communication circuit 1400 becomes significantly different by simply change in the amount of delay time in the delay line (DL).

Therefore, from the user's perspective, it is impossible to directly model the equivalent circuit models 1500 and 1600 without first identifying the characteristics of each element block and each block connection line of the quantum communication circuit 1400 as well as the transmission path of the optical signal in each element block.

In contrast, according to the simulation device 800 according to the present invention, instead of the user directly modeling equivalent circuit models 1500 and 1600, the device has a function of automatically converting all or part of the quantum communication circuit 1400 into equivalent circuit models 1500, 1600 and providing it to the user by simply inputting a circuit conversion request action in a state where a quantum communication circuit 1400 including a bidirectional signal path is virtually modeled. Accordingly, there are advantages that the user can easily check for himself/herself whether modeling of the quantum communication circuit 1400 is properly performed by checking the equivalent circuit model whenever necessary after the virtual modeling of the quantum communication circuit 1400 is completed or during modeling, and have the opportunity to make corrections before the modeling is completed.

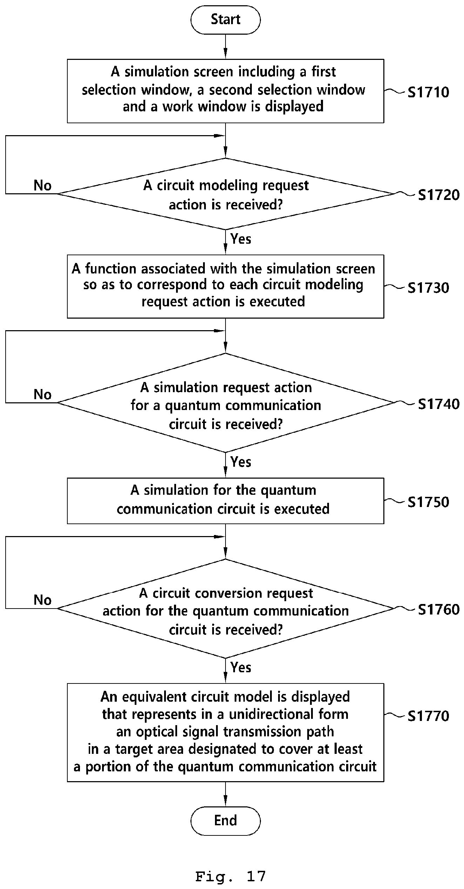

FIG. 17 is a flowchart exemplarily showing a simulation method of a quantum communication circuit according to one embodiment of the present invention.

Referring to FIG. 17, in step S1710, the control unit 833 outputs a display command of a simulation screen 900 including a first selection window 910, a second selection window 920 and a work window 930 to the display unit 821 through the interface unit 831. Accordingly, the simulation screen 900 is displayed on the display unit 821.

In step S1720, the control unit 833 determines whether a circuit modeling request action from the input device 810 is received through the input/output interface unit 831. If the value of step S1720 is "No", step S1720 can be repeated. If the value of step S1720 is "Yes", the process proceeds to step S1730.

In step S1730, in response to the circuit modeling request action inputted in step S1720, the control unit 833 executes a function associated with the simulation screen 900 so as to correspond to each circuit modeling request action. Accordingly, the progress of virtual modeling of the quantum communication circuit 1400 is displayed in the work window 930.

Specifically, in response to the first circuit modeling request action, the control unit 833 disposes in the work window 930 an element block associated with a component item selected in the first selection window 910. In response to the second circuit modeling request action, the control unit 833 disposes in the work window 930 a block connection line associated with the connection line item selected in the second selection window 920. The control unit 833, in response to the third circuit modeling request action, connects each of the plurality of block connection lines disposed in the work window 930 between any two of the plurality of element blocks disposed in the work window 930. At this time, at least one pair of element blocks among the plurality of element blocks disposed in the work window 930 can be interconnected to enable bidirectional transmission of the optical signal by one block connection line designated by the third circuit modeling request action as disposed in the work window 930.

According to this, there is no special restriction on a disposition order between multiple element blocks and multiple block connection lines that can be used for modeling the quantum communication circuit 1400. For example, modeling of a quantum communication circuit 1400 can be performed by first disposing a plurality of element blocks and then disposing block connection lines, by first disposing a plurality of block connection lines and then disposing element blocks or by alternately disposing element blocks and block connection lines.

As steps S1720 and S1730 are repeated at least three times, a quantum communication circuit 1400 is gradually constructed in the work window 930.

In step S1740, the control unit 833 determines whether a simulation request action for a virtually modeled quantum communication circuit 1400 in the work window 930 is received. If the value of step S1740 is "No", the process returns to step S1720.

In step S1750, the control unit 833 executes a simulation for the quantum communication circuit 1400. The control unit 833 can control the display unit 821 to display a result message notifying the execution result of the simulation for the quantum communication circuit 1400 on at least a portion of the simulation screen 900.

The simulation method according to the present invention may further include steps S1760 and S1770.

In step S1760, the control unit 833 determines whether a circuit conversion request action for the quantum communication circuit 1400 is received. If the value of step S1760 is "No", step S1760 may be repeated. If the value of step S1760 is "Yes", the process proceeds to step S1770.

In step S1770, in response to the circuit conversion request action received in step S1760, the control unit 833 displays, in the work window 930, equivalent circuit models 1500 and 1600 representing in a unidirectional form an optical signal transmission path in a target area 1410 designated to cover at least a portion of the quantum communication circuit 1400.

The simulation method according to the present invention may further include the step of providing circuit configuration information. The circuit configuration information includes information for each element block disposed on the simulator screen 900, connection information between element blocks and/or parameter setting information for each element block. The control unit 833 can identify the circuit configuration information of the quantum communication circuit 1400 modeled in the work window 900, and then provide the user, through the simulation screen 900, with the identified circuit configuration information and expected results or information such as signal flow/characteristics/timing at that point in time. The control unit 833 can automatically identify the circuit configuration information when disposing an element block or block connection line in the work window 930, when setting parameters for the element block or block connection line and/or when modeling of the quantum communication circuit 1400 is completed, or can identify a circuit configuration information under the condition of receiving the circuit configuration information request action from the input/output interface unit 831.

The user can check the circuit configuration information displayed on the simulation screen 900 and then modify/change the circuit configuration (parameter setting value, etc.) of each element block and/or each block connection line.

In the user check step, if the user expects a result called A and inputs a parameter called B, it can be informed the user that the result expected through the circuit configuration information is C and the user can then analyze the result C and perform actions such as changing components, changing connections between components and changing component parameter values to derive result A.

The configurations which run the technical features of the present invention included in the block diagrams and flowcharts illustrated in the drawings attached to this specification, represent logical boundaries between the configurations. However, according to the embodiments of software or hardware, the illustrated configurations and their functions are executed in the form of standalone software modules, monolithic software structures, codes, services and combinations thereof and stored in a medium that can be ran by a computer having a processor capable of executing stored program codes, instructions, etc., thus all such embodiments should be considered to fall in the scope of the present invention.

Accordingly, while the attached drawings and the description thereof illustrate the technical features of the present invention, they should not be simply inferred unless a specific arrangement of software for implementing these technical features is explicitly mentioned. That is, various embodiments described above may exist, and since such embodiments may have some modifications while retaining the same technical features as the present invention, this should also be considered to fall in the scope of the present invention.

Also, although a flowchart depicts operations in a particular order in the drawing, this is merely depicted to achieve the most desirable results and it should not be understood that the operations must be performed in the particular order or sequential order depicted or that all of the depicted operations must be performed. In certain cases, multitasking and parallel processing can be advantageous. Furthermore, the separation of the various system components of the embodiments described above should not be construed as requiring such separation in all embodiments and it should be understood that the described program components and systems can generally be integrated together in a single software product or packaged into multiple software products.

## Claims

1. A method for virtually simulating a quantum communication comprising the steps of:
displaying, on a display unit, a simulation screen including a first selection window, a second selection window and a work window, wherein the first selection window is an area in which a plurality of element items associated one-to-one with a plurality of element blocks that can be used for modeling a quantum communication circuit are displayed, and the second selection window is an area in which a plurality of connection line items associated one-to-one with a plurality of block connection lines that can be used for modeling the quantum communication circuit are displayed;
disposing an element block associated with an element item selected in the first selection window in the work window in response to a first circuit modeling request action;
disposing a block connection line associated with a connection line item selected in the second selection window in the work window in response to a second circuit modeling request action;
connecting each of the block connection lines disposed in the work window to two of the plurality of element blocks disposed in the work window, wherein at least one pair of element blocks among the plurality of element blocks disposed in the work window are interconnected by one of the block connection lines disposed in the work window to enable the bidirectional transfer of optical signals; and
executing, in response to a simulation request action, a simulation of the quantum communication circuit virtually modeled in the work window by means of the plurality of element blocks and the plurality of block connection lines disposed in the work window.

2. The method according to Claim 1 wherein the first circuit modeling request action includes at least one of a drag and drop from the first selection window to the working window and a double-click in the first selection window; and the second circuit modeling request action includes at least one of a drag and drop from the second selection window to the working window and a double-click in the second selection window.

3. The method according to Claim 2 wherein the first circuit modeling request action further includes setting element parameters for each element block disposed in the work window, and the second circuit modeling request action further includes setting connection parameters for each block connection line disposed in the work window.

4. The method according to Claim 1 wherein the plurality of element blocks includes:
a photon laser;
a photon detector;
at least one of an attenuator, a beam splitter, a circulator, a delay line, a Faraday mirror, a polarization beam splitter, a phase modulator, a storage line, an intensity modulator and a wave plate;
a control block that generates an electric signal for controlling other connected element blocks; and
a monitoring block that acquires operation information of other connected element blocks.

5. The method according to Claim 1 wherein the plurality of block connection lines includes unidirectional optical signal lines, bidirectional optical signal lines, unidirectional quantum channels, bidirectional quantum channels, unidirectional electrical signal lines, bidirectional electrical signal lines and monitoring signal lines.

6. The method according to Claim 1 further comprising the step of displaying, in the working window, an equivalent circuit model representing an optical signal transmission path in a target area which is at least a portion of the entire area of the working window in a unidirectional form, in response to a circuit transformation request action.

7. The method according to Claim 6 wherein the circuit transformation request action includes dragging from one point in the work window to another point.

8. The method according to Claim 6 wherein the target area covers at least two or more element blocks of the plurality of element blocks disposed in the work window, at least one pair of element blocks in the target area are interconnected to enable bidirectional transmission of optical signals, and the transmission path of the optical signals has any one element block in the target area as a starting point and another element block in the target area as an ending point.

9. A device for virtually simulating a quantum communication comprising
an output device configured to display, on a display unit, a simulation screen including a first selection window, a second selection window and a work window, wherein the first selection window is an area in which a plurality of element items associated one-to-one with a plurality of element blocks that can be used for modeling a quantum communication circuit are displayed, and the second selection window is an area in which a plurality of connection line items associated one-to-one with a plurality of block connection lines that can be used for modeling the quantum communication circuit are displayed;
an input device for receiving a first circuit modeling request action, a second circuit modeling request action, a third circuit modeling request action and a simulation request action; and
a processing device operably coupled to the output device and the input device, wherein the processing device configured to dispose an element block associated with an element item selected in the first selection window in the work window in response to a first circuit modeling request action; dispose a block connection line associated with a connection line item selected in the second selection window in the work window in response to a second circuit modeling request action; connect each of the block connection lines disposed in the work window to two of the plurality of element blocks disposed in the work window, wherein at least one pair of element blocks among the plurality of element blocks disposed in the work window are interconnected by one of the block connection lines disposed in the work window to enable the bidirectional transfer of optical signals; and execute, in response to a simulation request action, a simulation of the quantum communication circuit virtually modeled in the work window by means of the plurality of element blocks and the plurality of block connection lines disposed in the work window.
